# EUROPÄISCHE PATENTSCHRIFT

(11) **EP 2 918 379 B1**
(45) Veröffentlichungstag und Bekanntmachung des Hinweises auf die Patenterteilung: **20.07.2016**
(21) Anmeldenummer: 15000294.7
(22) Anmeldetag: 02.02.2015
(51) Int. Cl.: B25J 15/04, B23Q 1/00

(54) **Kupplungsvorrichtung für ein Handhabungsgerät**
Coupling device for a handling device
Dispositif d'embrayage pour un appareil de manipulation

(30) Priorität: 11.03.2014 CH 3632014
(43) Veröffentlichungstag der Anmeldung: 16.09.2015
(73) Patentinhaber: Erowa AG, 5734 Reinach (CH)
(72) Erfinder: Hediger, Hans, 5734 Reinach (CH)
(74) Vertreter: Rottmann, Maximilian

(56) Entgegenhaltungen:
- EP-A1- 1 970 170
- DE-A1-102011 008 601

## Beschreibung

Die Erfindung betrifft eine Kupplungsvorrichtung für ein Handhabungsgerät. Derartige Kupplungsvorrichtungen umfassen eine Spannvorrichtung und einen daran fixierbaren Halter. Die Spannvorrichtung wird üblicherweise an einem Handhabungsgerät wie beispielsweise einem Roboter fixiert, während der Halter an einem Werkzeug- oder Werkstückträger -Palette- befestigt wird. Die Palette kann dann mittels des Halters wiederholt positionsgenau an der Spannvorrichtung festgespannt werden.

Aus der EP 1 707 307 ist eine gattungsgemässe Kupplungsvorrichtung bekannt, welche als Schnellspannsystem bezeichnet wird und aus einer Spannaufnahme und einem darin festspannbaren Spannbolzen besteht. Das Schnellspannsystem weist ein rundes Gehäuse auf, das mit der zentral angeordneten Spannaufnahme versehen ist. Zum Festspannen des Spannbolzens sind radial verschiebbare Spannschieber vorgesehen. Der Spannbolzen besitzt eine umlaufende Nut, an welcher an den Spannschiebern radial innen liegende Verrieglungsnasen zum Fixieren des Spannbolzens angreifen. Die Betätigung der Spannbolzen erfolgt mittels eines federbelasteten Kolbens. Der genannte Kolben besitzt dazu Stellglieder in der Form von Zylinderstiften, welche an Schrägführungen mit ungleichförmigen Führungskonturen der Spannschieber angreifen, so dass eine Axialbewegung des Kolbens zu einer Radialbewegung der Spannschieber führt. Durch die runde Bauweise des Schnellspannsystems beansprucht dieses insbesondere in der Höhe relativ viel Platz. Dadurch werden insbesondere Paletten, welche üblicherweise nicht sehr hoch sind, von dem Schnellspannsystem in der Höhe deutlich überragt, was nachteilig bei der Bearbeitung von auf der Palette festgespannten Werkstücken sein kann.

Die JP 3419543B2 beschreibt eine Kupplungsvorrichtung für Roboter, die mit einem Grundkörper und einem daran festspannbaren Adapter/Halter versehen ist. Der Grundkörper ist mit einer Spannvorrichtung versehen, die aus zwei seitlichen Kolben und damit verbundenen Stangen zum Betätigen von Bolzen besteht. Die Bolzen werden in Ausnehmungen geführt. Der Adapter seinerseits ist mit hakenförmigen Seitenteilen versehen, in die Ausnehmungen eingelassen sind, in welche die beiden Bolzen lateral hineinpressbar sind. Der Grundkörper weist zudem einen zentralen Kolben und eine damit verbundene Stange auf. Am Ende der Stange ist ein Betätigungsnocken angeordnet, mittels welchem zwei Hebel verdrehbar sind. Die Hebel ihrerseits sind mittels Nocken mit zwei Fingern gekoppelt, welche durch das Verdrehen der Nocken seitlich hin- und herschiebbar sind. Jedem Verschlusselement ist somit ein separates Betätigungsorgan zugeordnet.

Aus der DE 102011008601 A1 ist ein manuell betätigter Roboterwerkzeugwechsler bekannt, der eine mit einem Roboterarm zu verbindende Master-Einheit und eine daran fixierbare Werkzeug-Einheit umfasst. Die Master-Einheit weist eine Basisplatte und ein darauf angeordnetes Gehäuse auf, in welchem ein Kolben beweglich aufgenommen ist. Die Werkzeug-Einheit wird auf die Master-Einheit aufgesetzt. Der mit einer manuell verdrehbaren Gewindespindel versehene Kolben weist am vorderen Ende eine mehrflächige Nockenoberfläche auf. Diese Nockenoberfläche dient dem Betätigen von kugelförmigen Rollelementen, die über in das Gehäuse eingelassene Öffnungen derart lateral verschiebbar sind, dass sie gegen einen Vorsprung der Werkzeug-Einheit gedrückt werden können, um die Werkzeug-Einheit an der Master-Einheit festzuspannen.

Aus der EP 1 970 170 A1 ist eine Kupplungsvorrichtung für einen Roboterarm bekannt. Diese umfasst einen armseitigen Halter und einen werkzeugseitigen Halter. Der armseitige Halter ist mit einem zylindrisch ausgebildeten Kugelverschluss versehen, dessen Kugeln an einem am werkzeugseitigen Halter angeordneten Aufnahmeteil angreifen können. Zur Betätigung der Kugeln ist ein Zylinder vorgesehen.

In der JP 3419543 B2 ist eine Kupplungsvorrichtung für Roboter offenbart, die mit einem Grundkörper und einem daran festspannbaren Adapter versehen ist. Der Grundkörper ist mit einer Spannvorrichtung versehen, die aus zwei seitlichen Kolben und damit verbundenen Stangen zum Betätigen von Bolzen besteht. Die Bolzen werden in Ausnehmungen geführt. Der Adapter seinerseits ist mit hakenförmigen Seitenteilen versehen, in die Ausnehmungen eingelassen sind, in welche die beiden Bolzen lateral hineinpressbar sind. Der Grundkörper weist zudem einen zentralen Kolben und eine damit verbundene Stange auf. Am Ende der Stange ist ein Betätigungsnocken angeordnet, mittels welchem zwei Hebel verdrehbar sind. Die Hebel ihrerseits sind mittels Nocken mit zwei Fingern gekoppelt, welche durch das Verdrehen der Nocken seitlich hin- und herschiebbar sind. Jedem Verschlusselement ist ein separates Betätigungsorgan zugeordnet.

Schliesslich geht aus der EP 1 970 170 A1 eine Kupplungsvorrichtung für einen Roboterarm hervor, die einen armseitigen Halter und einen werkzeugseitigen Halter umfasst. Der armseitige Halter ist mit einem zylindrisch ausgebildeten Kugelverschluss versehen, dessen Kugeln an einem am werkzeugseitigen Halter angeordneten Aufnahmeteil angreifen können. Zur Betätigung der Kugeln ist ein Zylinder vorgesehen. Somit offenbart dieses Dokument einen herkömmlichen Kugelverschluss.

Aufgabe der Erfindung ist es, eine dem eingangs genannten technischen Gebiet zugehörende Kupplungsvorrichtung für ein Handhabungsgerät zu schaffen, welche vergleichsweise flach jedoch trotzdem stabil ist und hohe Gewichte aufnehmen kann.

Die Lösung der Aufgabe ist durch die Merkmale des Anspruchs 1 definiert. Gemäss der Erfindung besitzen die Spannvorrichtung wie auch der Halter eine längliche, insbesondere eine im Wesentlichen rechteckige Grundform, wobei der Halter eine Verschlussöffnung aufweist, die mit seitlichen Erweiterungen versehen ist und der Verschlussmechanismus zwei lateral verschiebbare Verschlusselemente und ein dazwischen angeordnetes Betätigungsorgan aufweist, mittels welchem die Verschlusselemente derart in die seitlichen Erweiterungen der Verschlussöffnung hineinpressbar sind, dass der Halter an der Spannvorrichtung festspannbar ist.

Gemäß der Erfindung ist außerdem der Verschlussmechanismus zentral in einer schlitzförmigen Aussparung der Spannvorrichtung angeordnet und der Halter mit einer länglichen, leistenförmige Basis versehen, in die die genannte Verschlussöffnung eingelassen ist, wobei die Basis des Halters in die genannte Aussparung der Spannvorrichtung einführbar ist.

Eine derartige Kupplungsvorrichtung eignet sich insbesondere zum An- und Abkuppeln von Greifern und Paletten an ein Handhabungsgerät wie beispielsweise einen Roboter. Durch die längliche Gestaltung der Spannvorrichtung zusammen mit einem Halter, der eine Verschlussöffnung mit seitlichen Erweiterungen aufweist, an denen zwei lateral verschiebbare Verschlusselemente angreifen, wird die grundsätzliche Voraussetzung geschaffen, ein vergleichsweise flache Kupplungsvorrichtung zu schaffen, welche trotzdem hohe Gewichte aufnehmen kann.

Vorzugsweise ist der Verschlussmechanismus mittig an der Spannvorrichtung angeordnet, während die Verschlussöffnung mittig an dem Halter angeordnet ist. Eine solche Ausbildung ermöglicht einen einfachen und symmetrischen Aufbau der Spannvorrichtung.

Besonders bevorzugt ist der Halter einstückig ausgebildet. Diese ermöglicht einerseits den Halter sehr stabil auszubilden und gleichzeitig kostengünstig zu fertigen.

Besonders bevorzugt wird die schlitzförmige Aussparung der Spannvorrichtung nach oben und unten durch je eine Leiste begrenzt, wobei jede Leiste mit einem Führungsschlitz versehen ist, in welchem die Verschlusselemente lateral beweglich geführt sind. Die Führungsschlitze können vergleichsweise einfach in die jeweilige Leiste eingelassen werden.

Bei einer weiteren bevorzugten Weiterbildung sind die Spannvorrichtung wie auch der Halter zumindest doppelt so breit wie hoch und an der Spannvorrichtung ist auf jeder Seite des Verschlussmechanismus ein Zentrierbolzen angeordnet, wobei der jeweilige Zentrierbolzen mit je einer an der Basis des Halters korrespondierend angeordneten Zentrieröffnung zusammenzuarbeiten bestimmt ist. Bei dieser Ausbildung können die Zentrierbolzen vergleichsweise weit auseinander angeordnet werden, was sowohl hinsichtlich der Stabilität wie auch der Positioniergenauigkeit Vorteile mit sich bringt.

Bei einer weiteren bevorzugten Weiterbildung ist der Halter im Querschnitt gesehen im Wesentlichen T-förmig ausgebildet und weist zwei von der Basis rechtwinklig abstehende Schenkel auf. Ein derartiger Halter ist stabil und kann kostengünstig hergestellt werden.

Bei einer weiteren bevorzugten Weiterbildung bildet die zur Basis gerichtete Rückseite des jeweiligen Schenkels eine Anschlagfläche, mit welcher der Halter beim Festspannen an der Stirnseite der Spannvorrichtung zur Anlage kommt. Mit dieser Ausbildung können die Schenkel des Halters als Anschläge genutzt werden, was im Hinblick auf eine kostengünstige Fertigung vorteilhaft ist.

Bei einer weiteren bevorzugten Weiterbildung ist der Halter im Übergangsbereich von der Basis zu dem jeweiligen Schenkel mit je einer Erhöhung versehen, wobei die Erhöhungen derart auf die schlitzförmige Aussparung der Spannvorrichtung abgestimmt sind, dass der Halter beim Festspannen an der Spannvorrichtung in vertikaler Richtung mit geringem Spiel in deren schlitzförmiger Aussparung aufgenommen ist. Diese Ausbildung ist im Hinblick auf hohe Lasten vorteilhaft, da ein Teil der vom Halter auf die Spannvorrichtung zu übertragenden Kräfte über diese Erhöhungen übertragen werden können.

Bei einer weiteren bevorzugten Weiterbildung ist das Betätigungsorgan zwischen einer zurückgezogenen Grundstellung und einer vorgeschobenen Wirkstellung verschiebbar, wobei es in der vorgeschobenen Wirkstellung die beiden Verschlusselemente derart in die seitlichen Erweiterungen der Verschlussöffnung hineinzudrücken bestimmt ist, dass die Verschlusselemente kraft- und/oder formschlüssig an die seitlichen Erweiterungen teilweise begrenzenden Spannflächen des Halters zur Anlage kommen. Ein solcher Verschlussmechanismus ist einfach und kostengünstig zu realisieren.

Bei einer weiteren bevorzugten Weiterbildung ist das Betätigungsorgan keilförmig ausgebildet und besitzt zwei konisch zulaufende Seitenflächen, wobei das jeweilige Verschlusselement auf der dem Betätigungsorgan zugewandten Seite mit je einer planen Druckfläche versehen ist, die auf die zugeordnete Seitenfläche des Betätigungsorgans abgestimmt ist, wobei der Abstand und der Winkel zwischen den beiden Seitenflächen des Betätigungsorgans so gewählt ist, dass in der vorgeschobenen Wirkstellung des Betätigungsorgans ein Selbsthemmung zwischen dem Betätigungsorgan und den an den Spannflächen des Halters anliegenden Verschlusselementen erreicht wird. Eine derartige Ausbildung ist insbesondere im Hinblick auf eine hohe Betriebssicherheit von Vorteil, da der Verschlussmechanismus nach dem Vorschieben des Betätigungsorgans verriegelt ist und beispielsweise auch ein Stromausfall oder ein Leck in einer Versorgungsleitung keinen Einfluss auf die sichere Fixierung des Halters an der Spannvorrichtung hätte.

Bei einer weiteren bevorzugten Weiterbildung ist das jeweilige Verschlusselement im Wesentlichen zylindrisch ausgebildet ist, wobei die jeweilige Mantelfläche mit einer planen Anschlagfläche versehen ist, welche auf die Spannflächen des Halters abgestimmt ist. Ein solches Verschlusselement ist einfach und kostengünstig zu fertigen und kann hohe Verriegelungskräfte übertragen.

Vorzugsweise ist jedem Verschlusselement der Spannvorrichtung zumindest ein federbelastetes Mittel zugeordnet, mittels welchem das jeweilige Verschlusselement in Richtung des Betätigungsorgans vorgespannt ist. Dadurch kann sichergestellt werden, dass sich das jeweilige Verschlusselement nach dem Zurückziehen des Betätigungsorgans in seine nach innen gerückte, zusammengeschobene Grundstellung verschiebt, so dass der Halter von der Spannvorrichtung entfernt werden kann.

Besonders bevorzugt umfasst der Verschlussmechanismus einen mittels Druckfedern belasteten Spannkolben, der mit dem Betätigungsorgan gekoppelt ist und dieses unter der Wirkung der Druckfedern die Wirkstellung zu drücken bestrebt ist. Dadurch wird eine zuverlässige Verriegelung des Halters an der Spannvorrichtung zusätzlich sichergestellt, da die Druckfedern das Betätigungsorgan in Richtung der vorgeschobene Wirkstellung belasten.

Bei einer weiteren bevorzugten Weiterbildung ist der Spannkolben entgegen der Kraft der Druckfedern pneumatisch, elektrisch oder hydraulisch in die Ausgangsstellung bewegbar ist. Dies sind bevorzugte Möglichkeiten, um den Spannkolben in die Ausgangsstellung zu bewegen und damit die Verriegelung aufzuheben.

Bei einer besonders bevorzugten Weiterbildung sind die die seitlichen Erweiterungen teilweise begrenzenden Spannflächen des Halters unter einem solchen Winkel zu der Bewegungsrichtung des Betätigungsorgans verlaufen, dass der Halter beim Festspannen an der Spannvorrichtung durch die sich an den Spannflächen des Halters anlegenden Verschlusselemente an die Spannvorrichtung herangezogen wird. Mit dieser Ausbildung wird der Halter beim Festspannen nicht nur fixiert sondern gleichzeitig an die Spannvorrichtung herangezogen.

Bei einer weiteren bevorzugten Weiterbildung verlaufen die Spannflächen des Halters unter einem Winkel zwischen 30° und 60°, insbesondere zwischen 40° und 50° zu der Verschieberichtung des Betätigungsorgans. Auf diese Weise kann die axiale Bewegung des Betätigungsorgans besonders vorteilhaft zum Heranziehen des Halters beim Fixieren an der Spannvorrichtung genutzt werden.

Nachfolgend wird die Erfindung anhand von Zeichnungen näher erläutert. Dabei zeigt:
- Fig. 1: die aus einer Spannvorrichtung und einem Halter bestehende Kupplungsvorrichtung in einer perspektivischen Ansicht;
- Fig. 2: den Halter und die Spannvorrichtung in teilweise explodierter Darstellung;
- Fig. 3: einen Querschnitt durch die Spannvorrichtung und den Halter im ungespannten Zustand;
- Fig. 3a: einen vergrösserten Ausschnitt aus der Fig. 3;
- Fig. 4: einen Querschnitt durch die Spannvorrichtung und den daran festgespannten Halter;
- Fig. 4a: einen vergrösserten Ausschnitt aus der Fig. 4;
- Fig. 5: einen weiteren Schnitt durch die Spannvorrichtung;
- Fig. 6: einen Schnitt durch den Vorderteil der Spannvorrichtung und den daran festgespannten Halter.

Grundsätzlich sind in den Figuren gleiche Teile mit gleichen Bezugszeichen versehen.

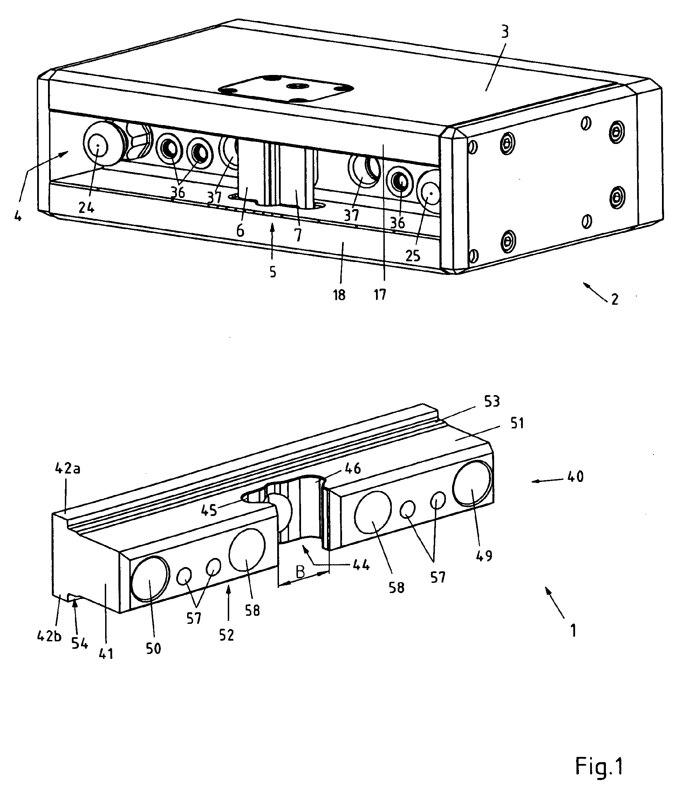

Die Figur 1 zeigt eine Kupplungsvorrichtung 1 für ein Handhabungsgerät, welche eine Spannvorrichtung 2 und einen Halter 40 umfasst. Die Spannvorrichtung 2 wird üblicherweise an einem Handhabungsgerät wie beispielsweise einem Roboter bzw. einem Roboterarm fixiert, während der Halter 40 beispielsweise an einem Greifwerkzeug oder einem Werkzeug- oder Werkstückträger -Palette- angeordnet wird. Mittels des Halters 40 kann das Greifwerkzeug bzw. die Palette wiederholt genau an der Spannvorrichtung 2 fixiert werden. Der von der Vorderseite dargestellte Halter 40 wird üblicherweise mit seiner Rückseite an der Palette bzw. dem Greifwerkzeug befestigt. Sowohl die Spannvorrichtung 2 wie auch der Halter 40 besitzen eine längliche, vorzugsweise eine im Wesentlichen rechteckige Grundform. Eine längliche Grundform der Spannvorrichtung 2 hat insbesondere im Vergleich mit runden Spannvorrichtungen den Vorteil, dass sie weniger hoch baut und sich daher insbesondere auch für flache Paletten eignet. Die Spannvorrichtung 2 wie auch der Halter 40 sind vorzugsweise zumindest zweimal so breit wie hoch, insbesondere zumindest 2.5-mal so breit wie hoch.

Die Spannvorrichtung 2 umfasst ein Grundgehäuse 3, das auf der Vorderseite mit einer schlitzförmigen Aussparung 4 versehen ist. Die Aussparung 4 wird auf der Ober- und Unterseite durch je eine Leiste 17, 18 begrenzt. Innerhalb dieser Aussparung 4 ist ein Verschlussmechanismus 5 angeordnet, der zwei lateral verschiebbare Verschlusselemente 6, 7 und ein zentral dazwischen angeordnetes Betätigungsorgan umfasst, wobei letzteres aus dieser Darstellung nicht ersichtlich ist. Der Verschlussmechanismus 5 ist dabei mittig, d.h. in der Mitte, an der Spannvorrichtung 2 angeordnet. Die beiden Verschlusselemente 6, 7 sind in der zusammengeschobenen Grundstellung dargestellt. Innerhalb der Aussparung 4 sind zudem zwei Zentrierbolzen 24, 25 angeordnet, welche der Positionierung des Halters 40 beim Festspannen an der Spannvorrichtung 2 dienen. In die schlitzförmige Aussparung 4 münden Anschlüsse 36, über welche Signale oder Medien von der Spannvorrichtung 2 auf den Halter 40 bzw. die damit verbundene Palette übertragen werden können. Zudem sind innerhalb der Aussparung 4 Bohrungen 37 vorgesehen, welche insbesondere im Zusammenhang mit schmalen Haltern (nicht dargestellt) von Nutzen sind, indem diese als Zentrierbohrungen für an einem schmalen Halter angeordnete Zentrierbolzen genutzt werden können.

Der einstückig ausgebildete Halter 40 ist im Querschnitt gesehen im Wesentlichen T-förmig ausgebildet mit einer länglichen, leistenförmigen Basis 41 und zwei rechtwinklig davon abstehenden Schenkeln 42a, 42b. In die Basis 41 des Halters ist eine Verschlussöffnung 44 eingelassen, die mit zwei seitlichen Erweiterungen 45, 46 versehen ist, welche in Form und Lage auf die Verschlusselemente 6, 7 der Spannvorrichtung 2 abgestimmt sind. Die Verschlussöffnung 44 ist mittig an dem Halter 40 angeordnet. Damit die Verschlusselemente 6, 7 in der zusammengeschobenen Grundstellung in die Verschlussöffnung 44 des Halters 40 eingeführt werden können, ist die Breite B der Verschlussöffnung 44 im Einführbereich grösser als der äussere Abstand zwischen den beiden Verschlusselementen 6, 7 im zusammengeschobenen Zustand. Der Halter 40 ist mit fünf grösseren Bohrungen 49, 50, 58, 59, 60 und vier kleineren Bohrungen 57 versehen. Die fünf grösseren Bohrungen 49, 50, 58, 59, 60 dienen der Aufnahme von Schrauben (nicht dargestellt), mittels welchen der Halter 40 an einer Palette (nicht dargestellt) befestigt werden kann. Die beiden äusseren Bohrungen 49, 50 dienen dabei gleichzeitig auch als Zentrierbohrungen, indem sie auf die Zentrierbolzen 24, 25 der Spannvorrichtung 2 abgestimmt sind. Die vier kleineren Bohrungen 57 dienen der Durchführung von elektrischen Leitungen oder Medien wie beispielsweise Druckluft etc. von dem Handhabungsgerät auf die mit dem Halter 40 verbundene Palette und umgekehrt.

Die Basis 41 des Halters 40 ist auf der Oberseite und der Unterseite mit je einer planen Fläche 51, 52 versehen, welche Flächen 51, 52 parallel zueinander verlaufen. Im Übergang von der Fläche 51, 52 zu dem jeweiligen Schenkel 42a, 42b ist eine Erhöhung 53, 54 in Form eines Absatzes angebracht. Der vertikale Abstand zwischen den beiden Erhöhungen 53, 54 ist derart auf die Höhe der schlitzförmigen Aussparung 4 der Spannvorrichtung 2 abgestimmt, dass der Halter 40 nach dem Festspannen an der Spannvorrichtung 2 in vertikaler Richtung mit geringem Spiel von ca. 0,05 bis 0,3 Millimetern in der schlitzförmigen Aussparung 4 aufgenommen ist. Durch die Form und Gestaltung des Halters 40 ist dieser sehr robust und kann vergleichweise günstig hergestellt werden.

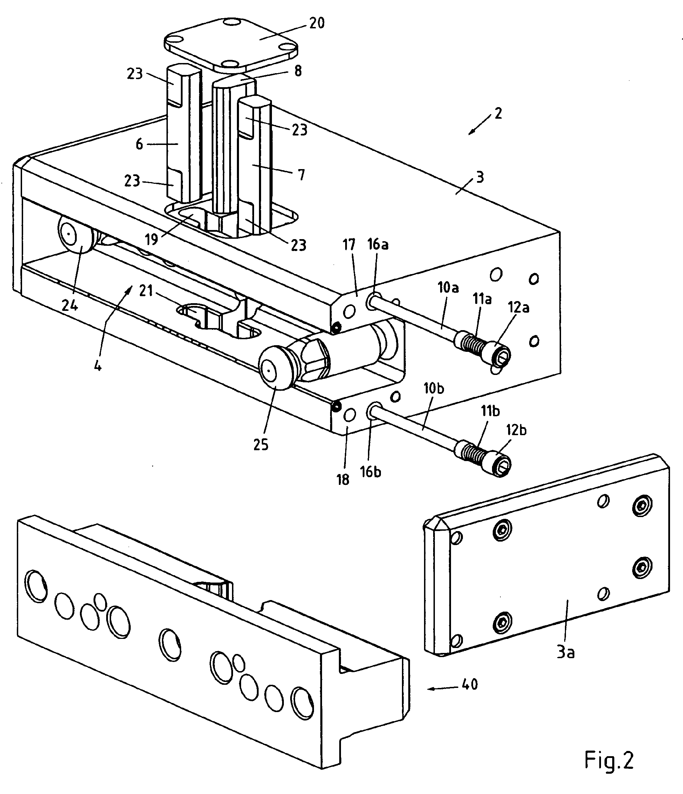

Die Fig. 2 zeigt den Halter 40 von der Rückseite sowie die Spannvorrichtung 2 in teilweise explodierter Darstellung. In dieser Darstellung sind insbesondere die beiden Verschlusselemente 6, 7 und das dazwischen angeordnete Betätigungsorgan 8 der Spannvorrichtung 2 erkennbar. Mittels des Betätigungsorgans 8 sind die beiden Verschlusselemente 6, 7 lateral, d.h. parallel zur Stirnseite der Spannvorrichtung 2 verschiebbar. Des Weiteren sind schlitzförmige, in die Leisten 17, 18 eingelassene Führungen 19, 21 für die beiden Verschlusselemente 6, 7 erkennbar. Diese schlitzförmigen Führungen 19, 21 erstrecken sich durch die obere 17 bzw. untere Leiste 18 hindurch und werden auf der Ober- bzw. Unterseite mittels je einer Platte begrenzt, wobei aus dieser Darstellung nur die obere Platte 20 ersichtlich ist. Die beiden Verschlusselemente 6, 7 sind im oberen und unteren Bereich mit Abflachungen 23 versehen, welche als Führung und Verdrehsicherung dienen, wenn die Verschlusselemente 6, 7 in die schlitzförmigen Führungen 19, 21 eingesetzt sind. Jedes Verschlusselement 6, 7 besitzt im oberen und unteren Bereich jeweils zwei parallele, einander diametral gegenüberliegende Abflachungen, wobei in dieser Darstellung nur jeweils die vorderen Abflachungen 23 ersichtlich sind. Eine seitlich am Grundgehäuse 3 anzubringende Abdeckplatte 3a ist ebenfalls erkennbar.

Des Weiteren sind zwei Stössel 10a, 10b erkennbar, welche in entsprechende, in die jeweilige Leiste 17, 18 eingelassenen Bohrungen 16a, 16b eingesetzt werden. Jedem dieser Stössel 10a, 10b ist eine Druckfeder 11a, 11 b und ein Gewindestift 12a, 12b zugeordnet, welche letztere in eine am Ende der Bohrung 16a, 16b eingelassene Gewindebohrung eingeschraubt werden und der Fixierung und Vorspannung der Druckfedern 11a, 11b dienen. Mittels den beiden Stösseln 10a, 10b sowie den zugehörigen Druckfedern 11a, 11b und Gewindestiften 12a, 12b wird das zweite, in der vorliegenden Zeichnung rechte Verschlusselement 7 nach innen in Richtung des Betätigungsorgans 8 vorgespannt. Auf der anderen Seite der Spannvorrichtung 2 sind ebenfalls entsprechende Stössel, Federn und Gewindestifte angeordnet, welche das erste Verschlusselement 6 nach innen in Richtung des Betätigungsorgans 8 vorspannen, wobei die genannten, dem ersten Verschlusselement 6 zugeordneten Stössel, Federn und Gewindestifte aus dieser Darstellung nicht ersichtlich sind.

Die beiden Verschlusselemente 6, 7 sind lateral entlang der schlitzförmigen Führungen 19, 21 verschiebbar, wobei sie durch eine nach vorne gerichtete Bewegung des Betätigungsorgans 8 auseinander in die Wirkstellung geschoben werden können, während sie bei zurückgezogenem Betätigungsorgan 8 mittels der zugeordneten Stössel wieder in die Ruhestellung zusammenschiebbar sind.

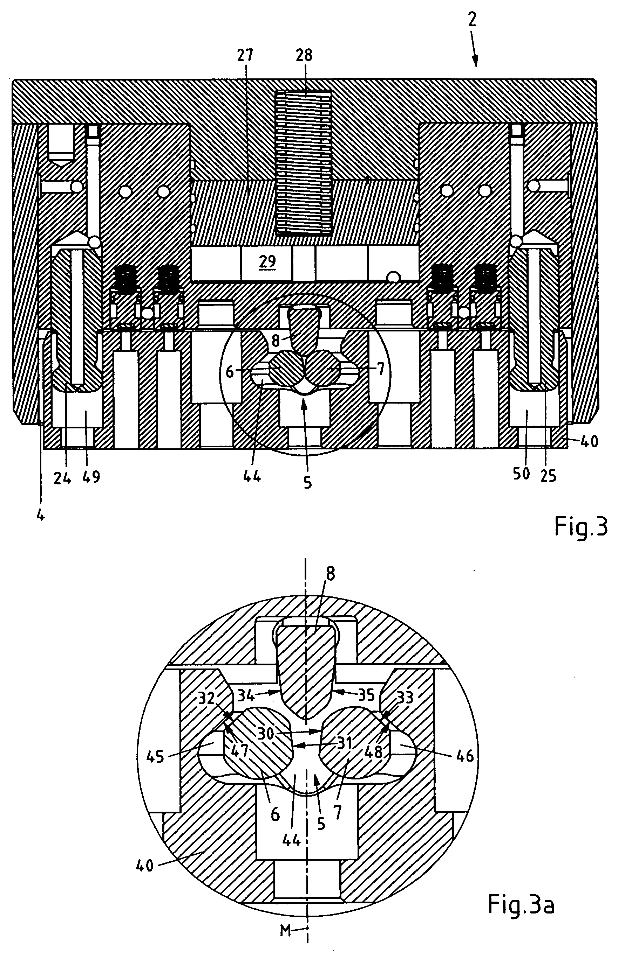

Fig. 3 zeigt einen Querschnitt durch die Kupplungsvorrichtung 1, namentlich die Spannvorrichtung 2 und den Halter 40 im ungespannten Zustand. Der Halter 40 ist in die schlitzförmige Aussparung 4 der Spannvorrichtung 2 eingesetzt, wobei der Verschlussmechanismus 5 den Ausgangszustand einnimmt, so dass der Halter 40 nicht festgespannt ist. Im hier dargestellten Ausgangszustand des Verschlussmechanismus 5 befindet sich das Betätigungsorgan 8 in der zurückgezogenen Grundstellung, während die beiden Verschlusselemente 6, 7 die zusammengeschobene Grundstellung einnehmen. Das Betätigungsorgan 8 ist keilförmig ausgebildet und besitzt zwei konisch zulaufende Seitenflächen. Der Verschlussmechanismus 5 umfasst des Weiteren einen verschiebbar in einem Druckraum 29 angeordneten Spannkolben 27, der mit dem Betätigungsorgan 8 mechanisch verbunden ist. Der Spannkolben 27 ist mittels mehrerer Druckfedern nach vorne in Richtung des Betätigungsorgans 8 vorgespannt, wobei aus dieser Darstellung nur eine Feder 28 ersichtlich ist. Um den Spannkolben 27 entgegen der Kraft der Federn in die hier dargestellte zurückgezogene Ausgangsstellung zu drücken, wird der Druckraum 29 auf der Vorderseite des Spannkolbens 27 mit einem unter Druck stehenden Medium, vorzugsweise Druckluft, beaufschlagt. Dadurch wird der Spannkolben 27 zusammen mit dem Betätigungsorgan 8 nach hinten in die dargestellte Ausgangsstellung bewegt. Des Weiteren sind die beiden Zentrierbolzen 24, 25 der Spannvorrichtung 2 erkennbar, welche sich in je eine zugehörige Zentrierbohrung 49, 50 des Halters 40 erstrecken.

In dem hier dargestellten Zustand, in welchem das Betätigungsorgan 8 die zurückgezogene Grundstellung einnimmt und die beiden Verschlusselemente 6, 7 sich in dem zusammengeschobenen Ausgangszustand befinden, kann der Halter 40 in die schlitzförmige Aussparung 4 der Spannvorrichtung 2 eingeschoben werden, zumal beim Einschieben des Halter 40 in die schlitzförmige Aussparung 4 der Spannvorrichtung 2 gleichzeitig auch die zusammengeschobenen Verschlusselemente 6, 7 in die Verschlussöffnung 44 des Halters 40 eingeführt werden.

Die Fig. 3a zeigt in vergrösserter Darstellung Teile des Verschlussmechanismus 5 der Spannvorrichtung zusammen mit der Verschlussöffnung 44 des Halters 40. Zugunsten einer besseren Erkennbarkeit der planen Flächen der Verschlusselemente 6, 7 sind die Verschlusselemente 6, 7 etwas beabstandet voneinander dargestellt. Aus dieser Darstellung ist erkennbar, dass jedes Verschlusselement 6, 7 auf der dem Betätigungsorgan 8 zugewandten Innenseite mit einer ersten planen Fläche 30, 31 -Druckfläche- und auf der Aussenseite mit einer zweiten planen Fläche 32, 33 -Anschlagflächeversehen ist. Die konisch zulaufenden Seitenflächen 34, 35 des Betätigungsorgans 8 sind auf die zugehörigen bzw. zugewandten Druckflächen 30, 31 der Verschlusselemente 6, 7 abgestimmt. Die beiden Druckflächen 30, 31 auf der Innenseite des jeweiligen Verschlusselements 6, 7 wie auch die Seitenflächen 34, 35 des Betätigungsorgans 8 verlaufen unter einem Winkel von ca. 4° bis 10° gegenüber der Mittenachse M der Kupplungsvorrichtung 1 bzw. der Spannvorrichtung 2 und des Halters 40, wobei im vorliegenden Beispiel ein Winkel von ca. 6° eingezeichnet wurde. Dadurch wird zwischen dem Betätigungsorgan 8 und den Verschlusselementen 6, 7 im verriegelten Zustand eine Selbsthemmung erreicht, wie nachfolgend noch erläutert wird. Zudem ist erkennbar, dass die seitlichen Erweiterungen 45, 46 der Verschlussöffnung 44 mit je einer schräg zulaufenden Spannfläche 47, 48 versehen sind, welche auf die jeweilige, auf der Aussenseite des zugeordneten Verschlusselements 6, 7 verlaufende plane Anschlagfläche 32, 33 abgestimmt sind, so dass das jeweilige Verschlusselement 6, 7 kraft- und formschlüssig daran zur Anlage kommt. Das Betätigungsorgan 8 ist entlang der Mittenachse M verschiebbar.

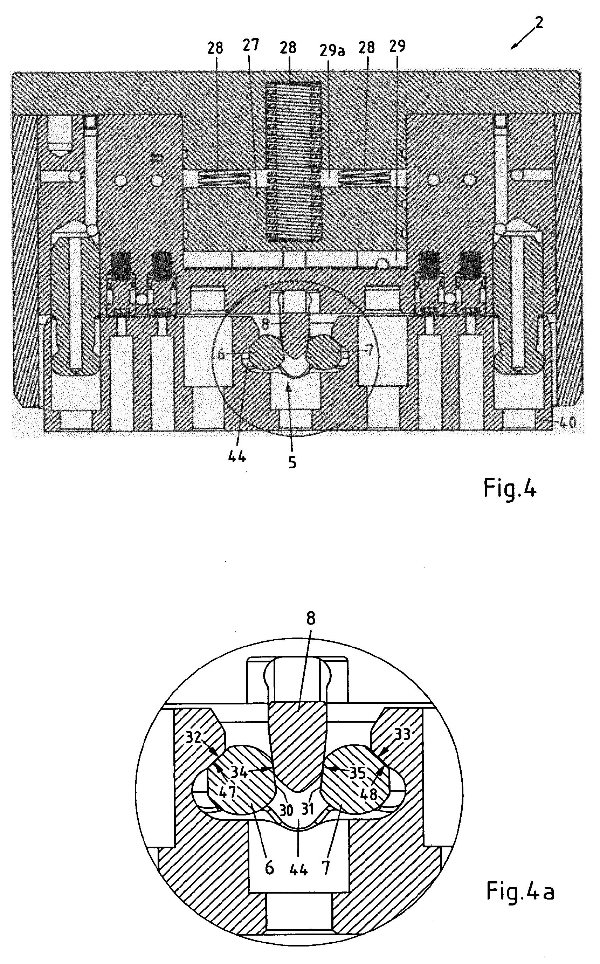

Die Fig. 4 zeigt die Kupplungsvorrichtung 1 gemäss Fig. 3 im gespannten Zustand, während die Fig. 4a in vergrösserter Darstellung Teile des Verschlussmechanismus 5 der Spannvorrichtung zusammen mit der Verschlussöffnung 44 des Halters 40 zeigt. Um den Verschlussmechanismus 5 aus dem in Fig. 3 gezeigten Ausgangszustand in den in den Fig. 4 und 4a gezeigten Wirkzustand zu bringen, wird der Druck im Druckraum 29 abgebaut, wodurch sich der Spannkolben 27 unter der Wirkung der Druckfedern 28 in die dargestellte vordere Wirkstellung bewegt. Bei der nach vorne gerichteten Bewegung schiebt der Spannkolben 27 das Betätigungsorgan 8 ebenfalls nach vorne, was zu einer lateralen, nach aussen gerichteten Verschiebung der beiden Verschlusselemente 6, 7 führt, indem die konisch zulaufenden Seitenflächen 34, 35 des Betätigungsorgans 8 die beiden Verschlusselemente 6, 7 auseinanderdrücken. Anhand der Fig. 4a ist erkennbar, dass sich zudem die planen Flächen 32, 33 auf der Aussenseite der Verschlusselemente 6, 7 an den schräg zulaufenden Spannflächen 47, 48 der Verschlussöffnung 44 anlegen, wodurch der Halter 40 an die Spannvorrichtung 2 herangezogen wird, bis die beiden Schenkel des Halters an den Leisten der Spannvorrichtung 2 zur Anlage kommen. Zur Unterstützung der durch die Federn 28 auf den Spannkolben 27 bzw. das Betätigungsorgan 8 ausgeübten Spannkraft kann der Raum 29a auf der Rückseite des Spannkolbens 27 mit einem unter Druck stehenden Medium, vorzugsweise Druckluft, beaufschlagt werden. Normalerweise genügt es, den Raum 29a nur kurz mit Druckluft zu beaufschlagen, damit das Betätigungsorgan 8 die beiden Verschlusselemente 6, 7 mit hoher Kraft lateral nach aussen drückt und der Halter 40 an die Spannvorrichtung 2 herangezogen wird. Durch die Abstimmung der Winkel zwischen den planen Druckflächen 30, 31 auf der Innenseite des jeweiligen Verschlusselements 6, 7 und den beiden Seitenflächen 34, 35 des Betätigungsorgans 8 wird zwischen dem Betätigungsorgan 8 und den an den Spannflächen 47, 48 anliegenden Verschlusselementen 6, 7 eine Selbsthemmung erreicht, so dass sich der Verschlussmechanismus 5 in einem verriegelten Zustand befindet. Um diesen verriegelten Zustand aufzuheben, muss der Druckraum 29 auf der Vorderseite des Spannkolbens 27 mittels eines Mediums, vorzugsweise mittels Druckluft, beaufschlagt werden, wobei der Druck soweit erhöht wird, bis sich der Spannkolben 27 zusammen mit dem Betätigungsorgan 8 in die zurückgezogene Ausgangsstellung verschiebt.

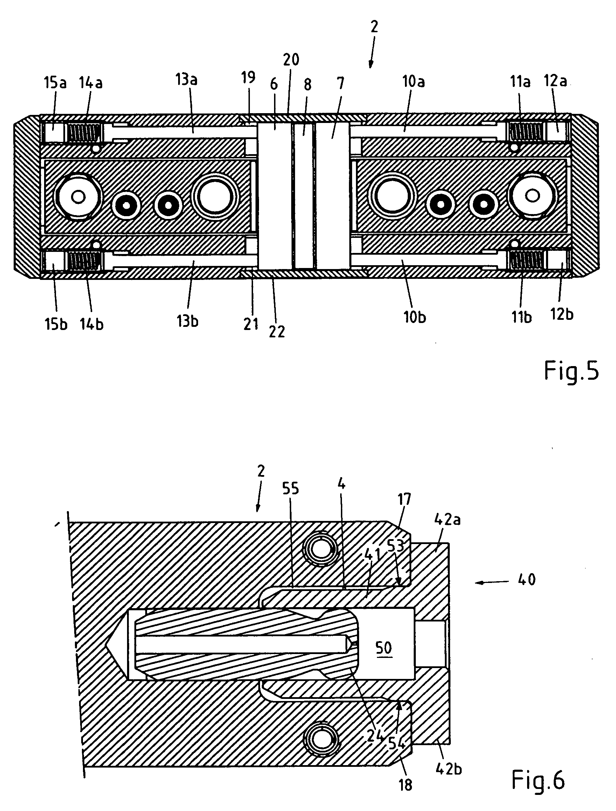

Die Fig. 5 zeigt einen weiteren Schnitt durch die Spannvorrichtung 2. Aus dieser Darstellung sind insbesondere das sich zwischen den beiden Verschlusselementen 6, 7 befindliche Betätigungsorgan 8 sowie die insgesamt vier Stössel 10a, 10b, 13a, 13b ersichtlich, welche mittels den zugehörigen Druckfedern 11 a, 11b, 14a, 14b das linke 6 bzw. rechte Verschlusselement 7 nach innen in Richtung des Betätigungsorgans 8 drücken. Die Stössel 10a, 10b, 13a, 13b sollen sicherstellen, dass sich die beiden Verschlusselemente 6, 7 in ihre zusammengeschobene Grundstellung verschieben, wenn das Betätigungsorgan 8 in seine Grundstellung zurückgezogen wird. Des Weiteren sind die beiden Deckel 20, 22 erkennbar, welche die der lateralen Führung der Verschlusselemente 6, 7 dienenden Führungsschlitze 19, 21 nach oben bzw. unten begrenzen. Zudem sind auch die Gewindestifte 12a, 12b, 15a, 15b erkennbar, mittels denen die Druckfedern 11a, 11b, 14a, 14b in Richtung der Verschlusselemente 6, 7 vorgespannt sind.

Fig. 6 zeigt einen Schnitt durch den Vorderteil der Spannvorrichtung 2 und den daran festgespannten Halter 40. In dieser Darstellung ist der sich in die Zentrierbohrung 50 des Halters 40 erstreckende Zentrierbolzen 24 sowie die sich in die schlitzförmige Aussparung 4 erstreckende Basis 41 des Halters 40 erkennbar. Der Halter 40 ist stinseitig spielfrei an der der Spannvorrichtung 2 festgespannt. Dies wird einerseits dadurch erreicht, dass die Vorderseite des jeweiligen Schenkels 42a, 42b eine Anschlagfläche bildet, mit welcher der Halter 40 beim Festspannen an der Stirnseite der Spannvorrichtung 2 bzw. der Leisten 17, 18 zur Anlage kommt. Andererseits legen sich die auf der Ober- und Unterseite der Basis 41 des Halters 40 angeordneten Erhöhungen 53, 54 auf der Innenseite der schlitzförmigen Aussparung 4 an den Leisten 17, 18 der Spannvorrichtung 2 an und stützen den Halter 40 in vertikaler Richtung an der Spannvorrichtung 2 ab. Zwischen der jeweiligen Erhöhung 53, 54 und der Innenseite der schlitzförmigen Aussparung 4 verbleibt zumindest im unbelasteten Zustand ein kleiner Spalt in der Grössenordnung von ca. 0,05 bis 0,6 Millimetern. Zwischen der Basis 41 des Halters 40 und der schlitzförmigen Aussparung 4 der Spannvorrichtung 2 verbleibt ein grösserer Spalt 55, welcher im Hinblick auf eine Unempfindlichkeit gegen Verschmutzung vorteilhaft ist, da allfällige Verunreinigungen wie beispielsweise Staub, Schmutzpartikel aber auch Späne in diesem Spalt 55 Aufnahme finden und keinen Einfluss auf die Positioniergenauigkeit des Halters 40 an der Spannvorrichtung 2 und/oder die Funktionsweise der Kupplungsvorrichtung haben. Es versteht sich, dass trotzdem Luftausblasöffnungen vorgesehen werden können, über welche exponierte Bauteile der Kupplungsvorrichtung angeblasen und gereinigt werden können.

Durch die erläuterte Ausgestaltung zusammen mit dem Verschlussmechanismus, welcher in der vorgängig beschriebenen Weise an der Verschlussöffnung des Halters 40 angreift, wird sichergestellt, dass der Halter 40 hohe Lasten und hohe Drehmomente aufnehmen kann. Diesbezügliche Versuche haben ergeben, dass eine Spannvorrichtung 2 mit einer Länge von ca. 210 Millimetern und einer Höhe von ca. 70 Millimetern einen Halter 40 wiederholbar genau und sicher fixieren kann, der mit einer Palette mit einer Länge von 800 Millimetern verbunden ist und eine Last von 500 Kilogramm trägt. Bei diesem Beispiel wird davon ausgegangen, dass die Last zentral auf der mit dem Halter verbundenen Palette angeordnet ist.

Es versteht sich, dass das vorgängig anhand der Zeichnungen erläuterte Ausführungsbeispiel keinesfalls als abschliessend zu betrachten ist, sondern dass im Rahmen des in den Patentansprüchen definierten Schutzumfangs durchaus von dem erläuterten Ausführungsbeispiel abweichende Gestaltungen möglich sind.

## Patentansprüche

1. Kupplungsvorrichtung (1) für ein Handhabungsgerät, mit einer am Handhabungsgerät fixierbaren Spannvorrichtung (2) und einem daran festspannbaren Halter (40), wobei die Spannvorrichtung (2) einen Verschlussmechanismus (5) aufweist, dessen Verschlusselemente an einer Erhebung oder Vertiefung des Halters (40) anzugreifen bestimmt sind, wobei sowohl die Spannvorrichtung (2) wie auch der Halter (40) eine längliche, insbesondere eine im Wesentlichen rechteckige Grundform besitzen, wobei der Halter (40) eine Verschlussöffnung (44) aufweist, die mit seitlichen Erweiterungen (45, 46) versehen ist und der Verschlussmechanismus (5) zwei lateral verschiebbare Verschlusselemente (6, 7) und ein dazwischen angeordnetes Betätigungsorgan (8) aufweist, mittels welchem die Verschlusselemente (6, 7) derart in die seitlichen Erweiterungen (45, 46) der Verschlussöffnung (44) hineinpressbar sind, dass der Halter (40) an der Spannvorrichtung (2) festspannbar ist, **dadurch gekennzeichnet, dass** der Verschlussmechanismus (5) zentral in einer schlitzförmigen Aussparung (4) der Spannvorrichtung (2) angeordnet ist und der Halter (40) eine längliche, leistenförmige Basis (41) aufweist, in die die genannte Verschlussöffnung (44) eingelassen ist, wobei die Basis (41) des Halters (40) in die genannte Aussparung (4) der Spannvorrichtung (2) einführbar ist.

2. Kupplungsvorrichtung nach Anspruch 1, **dadurch gekennzeichnet, dass** der Verschlussmechanismus (5) mittig an der Spannvorrichtung (2) und die Verschlussöffnung (44) mittig an dem Halter (40) angeordnet ist.

3. Kupplungsvorrichtung nach Anspruch 1 oder 2, **dadurch gekennzeichnet, dass** der Halter (40) einstückig ausgebildet ist.

4. Kupplungsvorrichtung nach Anspruch 1, **dadurch gekennzeichnet, dass** die schlitzförmige Aussparung (4) der Spannvorrichtung (2) nach oben und unten durch je eine Leiste (17, 18) begrenzt wird, wobei jede Leiste (17, 18) mit einem Führungsschlitz (19, 21) versehen ist, in welchem die Verschlusselemente (6, 7) lateral beweglich geführt sind.

5. Kupplungsvorrichtung nach einem der vorhergehenden Ansprüche, **dadurch gekennzeichnet, dass** sowohl die Spannvorrichtung (2) wie auch der Halter (40) zumindest doppelt so breit wie hoch sind und an der Spannvorrichtung (2) auf jeder Seite des Verschlussmechanismus (5) ein Zentrierbolzen (24, 25) angeordnet ist, wobei der jeweilige Zentrierbolzen (24, 25) mit je einer in die Basis (41) des Halters (40) korrespondierend eingelassenen Zentrieröffnung (49, 50) zusammenzuarbeiten bestimmt ist.

6. Kupplungsvorrichtung nach einem der vorhergehenden Ansprüche, **dadurch gekennzeichnet, dass** der Halter (40) im Querschnitt gesehen im Wesentlichen T-förmig ausgebildet ist und zwei von der Basis (41) rechtwinklig abstehende Schenkel (42a, 42b) aufweist.

7. Kupplungsvorrichtung nach Anspruch 6, **dadurch gekennzeichnet, dass** die zur Basis (41) gerichtete Vorderseite des jeweiligen Schenkels (42a, 42b) eine Anschlagfläche bildet, mit welcher der Halter (40) beim Festspannen an der Stirnseite der Spannvorrichtung (2) zur Anlage kommt.

8. Kupplungsvorrichtung nach Anspruch 6 oder 7, **dadurch gekennzeichnet, dass** der Halter (40) im Übergangsbereich von der Basis (41) zu dem jeweiligen Schenkel (42a, 42b) mit je einer Erhöhung (53, 54) versehen ist, wobei die Erhöhungen (53, 54) derart auf die schlitzförmige Aussparung (4) der Spannvorrichtung (2) abgestimmt sind, dass der Halter (40) beim Festspannen an der Spannvorrichtung (2) in vertikaler Richtung mit geringem Spiel in deren schlitzförmiger Aussparung (4) aufgenommen ist.

9. Kupplungsvorrichtung nach einem der vorhergehenden Ansprüche, **dadurch gekennzeichnet, dass** das Betätigungsorgan (8) zwischen einer zurückgezogenen Grundstellung und einer vorgeschobenen Wirkstellung verschiebbar ist, wobei es in der vorgeschobenen Wirkstellung die beiden Verschlusselemente (6, 7) derart in die seitlichen Erweiterungen (45, 46) der Verschlussöffnung (44) hineinzudrücken bestimmt ist, dass die Verschlusselemente (6, 7) kraft- und/oder formschlüssig an die seitlichen Erweiterungen (45, 46) teilweise begrenzenden Spannflächen (47, 48) des Halters (40)

10. Kupplungsvorrichtung nach Anspruch 9, **dadurch gekennzeichnet, dass** das Betätigungsorgan (8) derart ausgebildet und auf die beiden Verschlusselemente (6, 7) abgestimmt ist, dass in der Wirkstellung des Betätigungsorgans (8) eine Selbsthemmung zwischen dem Betätigungsorgan (8) und den an den Spannflächen (47,48) des Halters (40) anliegenden Verschlusselementen (6, 7) erreicht wird.

11. Kupplungsvorrichtung nach Anspruch 9 oder 10, **dadurch gekennzeichnet, dass** das Betätigungsorgan (8) keilförmig ausgebildet ist und zwei konisch zulaufende Seitenflächen (34, 35) besitzt, wobei das jeweilige Verschlusselement (6, 7) auf der dem Betätigungsorgan (8) zugewandten Seite mit je einer planen Druckfläche (30, 31) versehen ist, die auf die zugeordnete Seitenfläche (34, 35) des Betätigungsorgans (8) abgestimmt ist, wobei der Abstand und der Winkel zwischen den beiden Seitenflächen (34, 35) des Betätigungsorgans (8) so gewählt ist, dass in der vorgeschobenen Wirkstellung des Betätigungsorgans (8) eine Selbsthemmung zwischen dem Betätigungsorgan (8) und den an den Spannflächen (47, 48) des Halters (40) anliegenden Verschlusselementen (6, 7) erreicht wird.

12. Kupplungsvorrichtung nach einem der Ansprüche 9 bis 11, **dadurch gekennzeichnet, dass** das jeweilige Verschlusselement (6, 7) im Wesentlichen zylindrisch ausgebildet ist, wobei die jeweilige Mantelfläche mit einer planen Anschlagfläche (32, 33) versehen ist, welche auf die Spannflächen (47, 48) des Halters (40) abgestimmt ist.

13. Kupplungsvorrichtung nach einem der vorhergehenden Ansprüche, **dadurch gekennzeichnet, dass** jedem Verschlusselement (6, 7) der Spannvorrichtung (2) zumindest ein federbelastetes Mittel zugeordnet ist, mittels welchem das jeweilige Verschlusselement (6, 7) in Richtung des Betätigungsorgans (8) vorgespannt ist.

14. Kupplungsvorrichtung nach einem der vorhergehenden Ansprüche, **dadurch gekennzeichnet, dass** der Verschlussmechanismus (5) einen mittels Druckfedern (28) belasteten Spannkolben (27) umfasst, der mit dem Betätigungsorgan (8) gekoppelt ist und dieses unter der Wirkung der Druckfedern (28) in die Wirkstellung zu drücken bestrebt ist.

15. Kupplungsvorrichtung nach Anspruch 14, **dadurch gekennzeichnet, dass** der Spannkolben (27) entgegen der Kraft der Druckfedern (28) pneumatisch, elektrisch oder hydraulisch in eine Ausgangsstellung bewegbar ist.

16. Kupplungsvorrichtung nach einem der Ansprüche 9 bis 12, **dadurch gekennzeichnet, dass** die die seitlichen Erweiterungen (45, 46) teilweise begrenzenden Spannflächen (47, 48) des Halters (40) unter einem solchen Winkel zu der Bewegungsrichtung des Betätigungsorgans (8) verlaufen, dass der Halter (40) beim Festspannen an der Spannvorrichtung (2) durch die sich an den Spannflächen (47, 48) des Halters (40) anlegenden Verschlusselemente (6, 7) an die Spannvorrichtung (2) herangezogen wird.

17. Kupplungsvorrichtung nach Anspruch 16, **dadurch gekennzeichnet, dass** die Spannflächen (47, 48) des Halters (40) unter einem Winkel zwischen 30° und 60°, insbesondere zwischen 40° und 50° zu der Verschieberichtung des Betätigungsorgans (8) verlaufen.

## Claims

1. A coupling device (1) for a manipulator featuring a clamping fixture (2) for fixedly connected to the manipulator and an adapter (40) for fixedly clamping thereto, the clamping fixture (2) comprising a locking mechanism (5) the locking elements of which are designed to engage a protuberance or recess of the adapter (40), both the clamping fixture (2) and the adapter (40) featuring an elongated, particularly an essentially rectangular basic shape, the adapter (40) featuring a locking opening (44) provided with side widenings (45, 46) and the locking mechanism (5) having two laterally shiftable locking elements (6, 7) and an actuating member (8) disposed inbetween, by means of which the locking elements (6, 7) are insertable in the side widenings (45, 46) of the locking opening (44) such that the adapter (40) is fixedly securable to the clamping fixture (2), **characterized in that** said locking mechanism (5) is also arranged centrally in a slotted recess (4) of the clamping fixture (2) and the adapter (40) is provided with an elongated, strip-shaped base (41) into which the cited locking opening (44) is inset, the base (41) of the adapter (40) being insertable into the cited recess (4) of the clamping fixture (2).

2. The coupling device as set forth in claim 1 **characterized in that** locking mechanism (5) is arranged in the middle of the clamping fixture (2) and the locking opening (44) in the middle of the adapter (40).

3. The coupling device as set forth in claim 1 or 2, **characterized in that** said adapter (40) is configured in one piece.

4. The coupling device as set forth in claim 1, **characterized in that** said slotted recess (4) of the clamping fixture (2) is defined top and bottom by a ledge (17, 18), each of which is machined with a guide slot (19, 21) for lateral travel guidance of the locking elements (6, 7).

5. The coupling device as set forth in any of the preceding claims, **characterized in that** said clamping fixture (2) as well as the adapter (40) are at least twice as wide as they are high and a centering pin (24, 25) is arranged on the clamping fixture (2) on each side of the locking mechanism (5), each centering pin (24, 25) being designed to cooperate with one centering opening (49, 50) each correspondingly machined in the basis (41) of the adapter (40).

6. The coupling device as set forth in any of the preceding claims, **characterized in that** said adapter (40) is configured cross-sectionally substantially tee-shaped and comprises two legs (42a, 42b) extending from the base (41) at right angles.

7. The coupling device as set forth in claim 6, **characterized in that** the front side of each leg (42a, 42b) facing the base (41) forms an abutment face for contacting the adapter (40) on being clamped to the end face of the clamping fixture (2).

8. The coupling device as set forth in claim 6 or 7, **characterized in that** said adapter (40) is provided in the transitional portion from the base (41) to each leg (42a, 42b) with a protuberance (53, 54), these protuberances (53, 54) being matched to the slotted recess (4) of the clamping fixture (2) such that the adapter (40) on being securely clamped to the clamping fixture (2) is mounted in the slotted recess (4) in a neat fit vertically.

9. The coupling device as set forth in any of the preceding claims, **characterized in that** said actuating member (8) is shiftable between a retracted basic position and an advanced active position, it in the advanced active position being designed to urge the two locking elements (6, 7) into the side widenings (45, 46) of the locking opening (44) such that the locking elements (6, 7) are in positive and/or non-positive contact with the clamping faces (47, 48) of the adapter (40) partly defining the side widenings (45, 46).

10. The coupling device as set forth in claim 9, **characterized in that** said actuating member (8) is configured matching the two locking elements (6, 7) such that in the active position of the actuating member (8) a self-locking effect is achieved between the actuating member (8) and the locking elements (6, 7) in contact with the clamping faces (47, 48) of the adapter (40).

11. The coupling device as set forth in claim 9 or 10, **characterized in that** said actuating member (8) is configured wedge-shaped in featuring two conically tapered side faces (34, 35), each locking element (6,7) being provided at the side facing the actuating member (8) with a flat pressure face(30, 31) matching the assigned side face (34, 35) of the actuating member (8), the spacing and angle between the two side faces (34., 35) of the actuating member (8) being selected so that in the advanced active position of the actuating member (8) a self-locking effect is achieved between the actuating member (8) and the locking elements (6, 7) in contact with the clamping faces (47, 48) of the adapter (40).

12. The coupling device as set forth in any of the claims 9 to 11, **characterized in that** each locking element (6,7) is configured substantially cylindrically, each shell face is provided with a flat pressure face (32, 33) matching the clamping faces (47, 48) of the adapter (40).

13. The coupling device as set forth in any of the preceding claims, **characterized in that** each locking element (6,7) of said clamping fixture (2) is assigned at least one spring-loaded means by means of which each locking element (6,7) is biased in the direction of the actuating member (8).

14. The coupling device as set forth in any of the preceding claims, **characterized in that** said locking mechanism (5) comprises a spring-loaded clamping piston (27) coupled to the actuating member (8) in urging it into the active position by the effect of the pressure springs (28).

15. The coupling device as set forth in claim 14, **characterized in that** said clamping piston (27) is designed to overcome the spring-loaded force by pneumatic, electrical or hydraulic means to achieve its starting position.

16. The coupling device as set forth in any of the claims 9 to 12, **characterized in that** said clamping faces (47, 48) of the adapter (40) partly defining the side widenings (45, 46) are angled relative to the direction of movement of the actuating member (8) such that the adapter (40) on being secured to the clamping fixture (2) is advanced to the clamping fixture (2) by the locking element (6,7) in contact with the clamping faces (47, 48) of the adapter (40).

17. The coupling device as set forth in claim 16, **characterized in that** said clamping faces (47, 48) of the adapter (40) are angled between 30° and 60°, particularly between 40° and 50° relative to the direction in which the actuating member (8) is shifted.

## Revendications

1. Dispositif de couplage (1) pour un appareil de manipulation, avec un dispositif de serrage (2) pouvant être fixé sur l'appareil de manipulation et un support (40) pouvant être serré sur celui-ci, dans lequel le dispositif de serrage (2) présente un mécanisme de fermeture (5), dont les éléments de fermeture sont destinés à venir en prise sur une saillie ou un creux du support (40), dans lequel aussi bien le dispositif de serrage (2) que le support (40) disposent d'une forme de base allongée, en particulier essentiellement rectangulaire, dans lequel le support (40) présente une ouverture de fermeture (44), qui est dotée d'élargissements latéraux (45, 46) et le mécanisme de fermeture (5) présente deux éléments de fermeture (6, 7) déplaçables latéralement et un organe d'actionnement (8) disposé entre ceux-ci, au moyen duquel les éléments de fermeture (6, 7) peuvent être pressés dans les élargissements latéraux (45, 46) de l'ouverture de fermeture (44) de telle sorte que le support (40) peut être serré sur le dispositif de serrage (2), **caractérisé en ce que** le mécanisme de fermeture (5) est disposé de façon centrale dans un évidement (4) en forme de fente du dispositif de serrage (2) et le support (40) présente une base (41) allongée, en forme de barre, dans laquelle ladite ouverture de fermeture (44) est ménagée, dans lequel la base (41) du support (40) peut être introduite dans ledit évidement (4) du dispositif de serrage (2).

2. Dispositif de couplage selon la revendication 1, **caractérisé en ce que** le mécanisme de fermeture (5) est disposé au milieu du dispositif de serrage (2) et l'ouverture de fermeture (44) est disposée au milieu du support (40).

3. Dispositif de couplage selon la revendication 1 ou 2, **caractérisé en ce que** le support (40) est réalisé d'un seul tenant.

4. Dispositif de couplage selon la revendication 1, **caractérisé en ce que** l'évidement (4) en forme de fente du dispositif de serrage (2) est délimité vers le haut et vers le bas par respectivement une baguette (17, 18), dans lequel chaque baguette (17, 18) est dotée d'une fente de guidage (19, 21), dans laquelle les éléments de fermeture (6, 7) sont guidés de manière latéralement mobile.

5. Dispositif de couplage selon l'une quelconque des revendications précédentes, **caractérisé en ce qu'**aussi bien le dispositif de serrage (2) que le support (40) sont au moins deux fois aussi larges que hauts et un boulon de centrage (24, 25) est disposé au niveau du dispositif de serrage (2) de chaque côté du mécanisme de fermeture (5), dans lequel le boulon de centrage (24, 25) respectif est destiné à coopérer avec respectivement une ouverture de centrage (49, 50) ménagée de manière correspondante dans la base (41) du support (40).

6. Dispositif de couplage selon l'une quelconque des revendications précédentes, **caractérisé en ce que** le support (40) est réalisé essentiellement en forme de T vu en coupe transversale et présente deux branches (42a, 42b) partant à angle droit de la base (41).

7. Dispositif de couplage selon la revendication 6, **caractérisé en ce que** la face avant de la branche (42a, 42b) respective dirigée vers la base (41) forme une surface de butée avec laquelle le support (40) vient en appui lors du serrage sur la face frontale du dispositif de serrage (2).

8. Dispositif de couplage selon la revendication 6 ou 7, **caractérisé en ce que** le support (40) est doté de respectivement une élévation (53, 54) dans la zone de transition de la base (41) à la branche (42a, 42b) respective, dans lequel les élévations (53, 54) sont adaptées à l'évidement (4) en forme de fente du dispositif de serrage (2) de telle sorte que le support (40) est reçu lors du serrage sur le dispositif de serrage (2) dans le sens vertical avec un faible jeu dans son évidement en forme de fente (4).

9. Dispositif de couplage selon l'une quelconque des revendications précédentes, **caractérisé en ce que** l'organe d'actionnement (8) peut être déplacé entre une position de base tirée en arrière et une position active poussée en avant, dans lequel il est destiné à pousser dans la position active poussée en avant les deux éléments de fermeture (6, 7) dans les élargissements latéraux (45, 46) de l'ouverture de fermeture (44) de telle sorte que les éléments de fermeture (6, 7) viennent en appui par force et/ou par correspondance de forme avec les surfaces de serrage (47, 48) du support (40) délimitant en partie les élargissements latéraux (45, 46).

10. Dispositif de couplage selon la revendication 9, **caractérisé en ce que** l'organe d'actionnement (8) est réalisé et adapté aux deux éléments de fermeture (6, 7) de sorte à obtenir dans la position active de l'organe d'actionnement (8) un auto-blocage entre l'organe d'actionnement (8) et les éléments de fermeture (6, 7) s'appliquant contre les surfaces de serrage (47, 48) du support (40).

11. Dispositif de couplage selon la revendication 9 ou 10, **caractérisé en ce que** l'organe d'actionnement (8) est réalisé de manière cunéiforme et dispose de "deux surfaces latérales (34, 35) coniques, dans lequel l'élément de fermeture (6, 7) respectif est doté sur le côté tourné vers l'organe d'actionnement (8) de respectivement une surface de pression plane (30, 31) qui est adaptée à la surface latérale (34, 35) affectée de l'organe d'actionnement (8), dans lequel la distance et l'angle entre les deux surfaces latérales (34, 35) de l'organe d'actionnement (8) sont sélectionnés de sorte à obtenir dans la position active poussée en avant de l'organe d'actionnement (8) un auto-blocage entre l'organe d'actionnement (8) et les éléments de fermeture (6, 7) s'appliquant contre les surfaces de serrage (47, 48) du support (40).

12. Dispositif de couplage selon l'une quelconque des revendications 9 à 11, **caractérisé en ce que** l'élément de fermeture (6, 7) respectif est réalisé de manière essentiellement cylindrique, dans lequel la surface d'enveloppe respective est dotée d'une surface de butée (32, 33) plane qui est adaptée aux surfaces de serrage (47, 48) du support (40).

13. Dispositif de couplage selon l'une quelconque des revendications précédentes, **caractérisé en ce qu'**au moins un moyen sollicité par ressort est affecté à chaque élément de fermeture (6, 7) du dispositif de serrage (2), au moyen duquel l'élément de fermeture (6, 7) respectif est précontraint en direction de l'organe d'actionnement (8).

14. Dispositif de couplage selon l'une quelconque des revendications précédentes, **caractérisé en ce que** le mécanisme de fermeture (5) comprend un piston de serrage (27) sollicité au moyen de ressorts de pression (28), qui est couplé à l'organe d'actionnement (8) et qui cherche à le pousser dans la position active sous l'action des ressorts de pression (28).

15. Dispositif de couplage selon la revendication 14, **caractérisé en ce que** le piston de serrage (27) peut être déplacé pneumatiquement, électriquement ou hydrauliquement dans une position initiale à l'encontre de la force des ressorts de pression (28).

16. Dispositif de couplage selon l'une quelconque des revendications 9 à 12, **caractérisé en ce que** les surfaces de serrage (47, 48) du support (40) délimitant en partie les élargissements latéraux (45, 46) s'étendent suivant un tel angle par rapport au sens de déplacement de l'organe d'actionnement (8) que le support (40) est tiré vers le dispositif de serrage (2) par les éléments de fermeture (6, 7) en appui contre les surfaces de serrage (47, 48) du support (40) lors du serrage sur le dispositif de serrage (2).

17. Dispositif de couplage selon la revendication 16, **caractérisé en ce que** les surfaces de serrage (47, 48) du support (40) s'étendent suivant un angle entre 30° et 60°, en particulier entre 40° et 50° par rapport au sens de déplacement de l'organe d'actionnement (8).
